## Europäisches Patentamt

## European Patent Office

## Office européen des brevets

(19)

(11) Numéro de publication: **0 094 276**
**B1**

(12)

# FASCICULE DE BREVET EUROPÉEN

(45) Date de publication du fascicule du brevet:
23.09.87

(51) Int. Cl.⁴: **B 62 M 3/08,** A 43 B 5/14

(21) Numéro de dépôt: **83400791.6**

(22) Date de dépôt: **21.04.83**

(54) · **Dispositif de pédalage pour cycle et chaussure adaptée.**

(30) Priorité: **12.05.82 FR 8208222**

(43) Date de publication de la demande:
**16.11.83 Bulletin 83/46**

(45) Mention de la délivrance du brevet:
**23.09.87 Bulletin 87/39**

(84) Etats contractants désignés:
**BE CH DE GB IT LI**

(56) Documents cité:
**EP-A-0 015 803**
**EP-A-0 058 438**
**EP-A-0 059 132**
**EP-A-0 075 510**
**FR-A-993 958**
**FR-A-2 301 193**
**FR-A-2 310 914**
**FR-A-2 373 440**
**FR-A-2 397 319**
**FR-A-2 436 707**
**FR-A-2 442 175**
**FR-A-2 464 661**
**GB-A-106 349**
**GB-A-459 608**

(73) Titulaire: **Christol, Lilian, 25 boulevard Gambetta,
F-34800 Clermont l'Herault (FR)**

(72) Inventeur: **Christol, Lilian, 25 boulevard Gambetta,
F-34800 Clermont l'Herault (FR)**

(74) Mandataire: **Cuer, André, CABINET CUER 30, rue
de Léningrad, F-75008 Paris (FR)**

## Description

La présente invention a trait au domaine des pédaliers pour cycle et concerne tout particulièrement un ensemble associant un nouveau type de pédale et une chaussure cycliste à semelle spécialement adaptée.

On sait que, pour obtenir le maximum d'efficacité en matière de pédalage, il faut utiliser la pédale avec un cale-pied muni de courroie et prévoir sous la semelle de chaussure une cale-pédale qui s'enclenche au-dessus de la partie postérieure de la cage de pédale. Divers perfectionnements on été proposés pour améliorer les positions de blocage latéral de la chaussure, notamment par utilisation d'une pédale d'un nouveau type dont la branche postérieure possède dans sa partie centrale un évidement (EP-A-0 075 510).

Ces améliorations notables laissent cependant subsister les inconvénients du cale-pied et de la cale-pédale, parmi lesquels il faut citer : une surface de contact entre semelle et pédale limitée aux quelques cm² de surface des branches de la pédale, la nécessité d'un fort serrage de la courroie de cale-pied ce qui est inconfortable et souvent dangereux, l'impossibilité d'utiliser la chaussure en marche à pied du fait de la proéminence constituée par la cale-pédale sous la semelle.

On a déjà proposé, certes, la suppression du cale-pied en combinant une pédale ou plate-forme de pédalage de structure spéciale, pouvant comporter des glissières latérales, avec une chaussure dont la semelle est munie soit d'un organe femelle à emboîtement coordonné à un organe mâle sur la pédale soit d'une plaque en saillie formant cale-pédale (voir par exemple brevet FR-A-2 449 587 et publicités sur la pédale CINELLI). Toutefois, ces systèmes sont complexes et de mise en oeuvre délicate; en outre le dispositif prévu sous la chaussure n'autorise pas la marche normale avec cette dernière.

On connaît par ailleurs un ensemble de pédalage comprenant une plate-forme à glissières latérales de forme arrondie épousant la forme du bord de semelle de chaussure et à système de verrouillage assujetti à un support de fixation relié à la manivelle du pédalier et qui est montée orientable sur ce support de fixation. La chaussure pénètre par le haut entre les glissières. Un tel arrangement, qui concerne, en fait, un cale-pédale, présente de multiples inconvénients tels que : pas d'appui de la totalité de la semelle sur la plate-forme, surélévation de la cale, impossibilité de marcher au sol avec la chaussure, commande manuelle du système de verrouillage-déverrouillage. Cet arrangement conforme au préambule de la revendication 1 et est connu du FR-A-2 373 440.

L'invention permet d'obvier à l'ensemble des inconvénients susvisés en proposant un dispositif de pédalage qui, non seulement, permet d'éliminer l'emploi du cale-pied, de la courroie et de la cale-pédale, mais d'obtenir une efficacité, une commodité d'emploi, un confort et une sécurité considérablement supérieure à ceux des systèmes connus à ce jour.

Pour atteindre ces buts et d'autres qui apparaitront au cours de la description, l'invention propose un ensemble de pédalage pour cycle et de chaussure adaptée, tel que conforme à la définition générale de la revendication 1.

La plate-forme de pédalage est de préférence réglable angulairement sur son support de fixation, par exemple par vis ou moyen analogue, pour satisfaire les utilisateurs pédalant avec un biais plus ou moins prononcé. En pratique, le support peut être constitué par une plaque métallique sur laquelle est fixé également le système de verrouillage par pêne et qui repose sur l'axe de la pédale. On notera toutefois que cet axe peut être supprimé, comme dans certaines pédales modernes, et que le support de plate-forme peut être prévu pour enclenchement direct dans la manivelle du cycle.

Selon un premier mode de réalisation, les moyens d'encastrement de la semelle de chaussure dans les glissières latérales de la plate-forme sont constitués par des ailerons ou débordements latéraux aptes à venir se coincer dans les glissières, lesquelles peuvent être avantageusement incurvées vers l'intérieur ou fermées dans leur partie antérieure de manière à former des butées pour la partie avant des ailerons.

Conformément à une autre variante d'exécution, les ailerons de la semelle de chaussure sont remplacés, en tout ou partie, par une gorge ou cannelure qui peut être pratiquée soit uniquement sur le bord avant soit, de préférence, sur tout le pourtour de la partie avant de la semelle. Une telle gorge est destinée à s'engager dans les glissières latérales de la plate-forme jusqu'à mise en butée des extrémités de gorge avec les extrémités postérieures desdites glissières. Dans ce mode de réalisation, qui permet de réduire la largeur hors tout de la plate-forme et de la chaussure ainsi que d'améliorer encore l'esthétique, on peut prévoir ou non le réglage longitudinal de l'avant de la plate-forme, avec ou sans butée antérieure, selon le désir de l'utilisateur.

De nombreuses autres caractéristiques du dispositif selon l'invention apparaitront dans la description qui suit, relative à des exemples d'exécution non limitatifs, illustrés sur les dessins annexés qui représentent schématiquement:

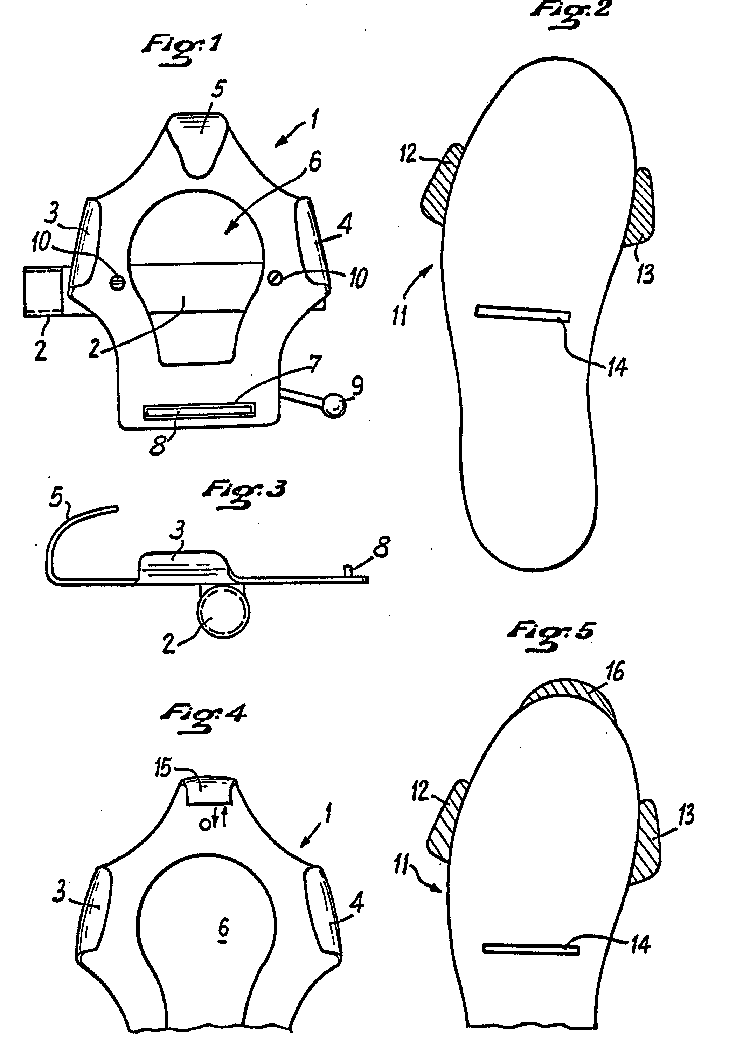

. Figure 1: une vue de dessus d'une plate-forme, servant de pédale, selon l'invention;

. Figure 2: une vue de dessous de la chaussure cycliste adaptée à cette plate-forme;

. Figure 3: la perspective d'une butée avant de la plate-forme de la figure 1.

. Figure 4: une variante de réalisation de la plate-forme ou pédale de la figure 1;

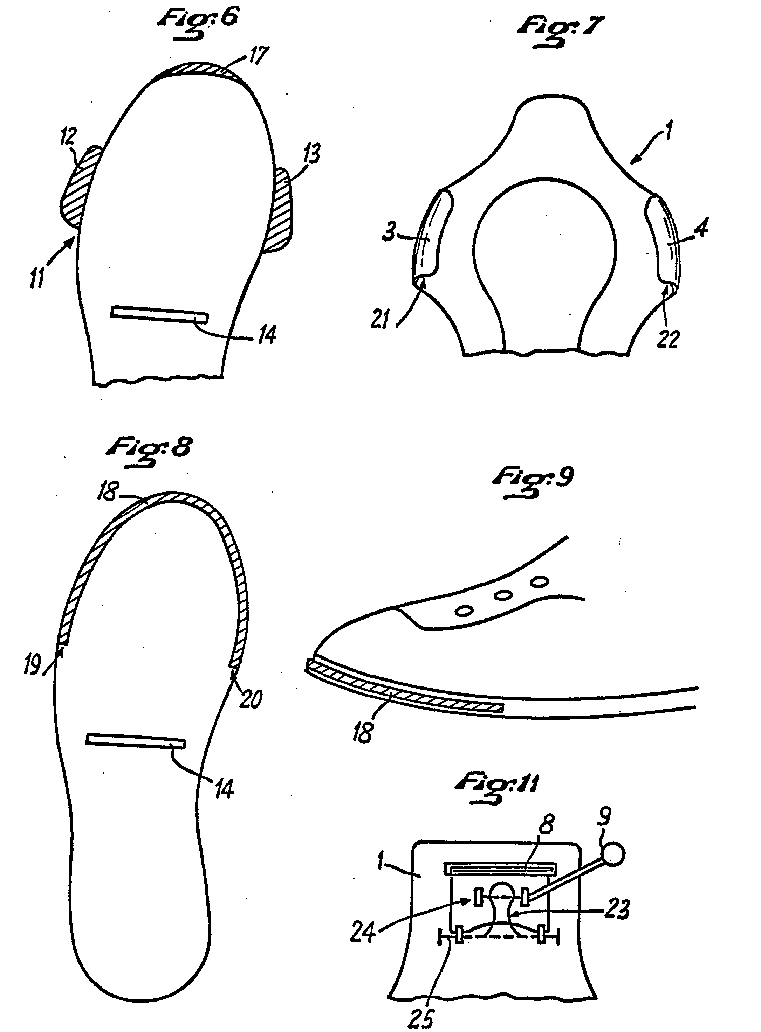

. Figures 5 et 6: des vues de dessous, partielles, de semelles de chaussures adaptées au dispositif de la figure 4;

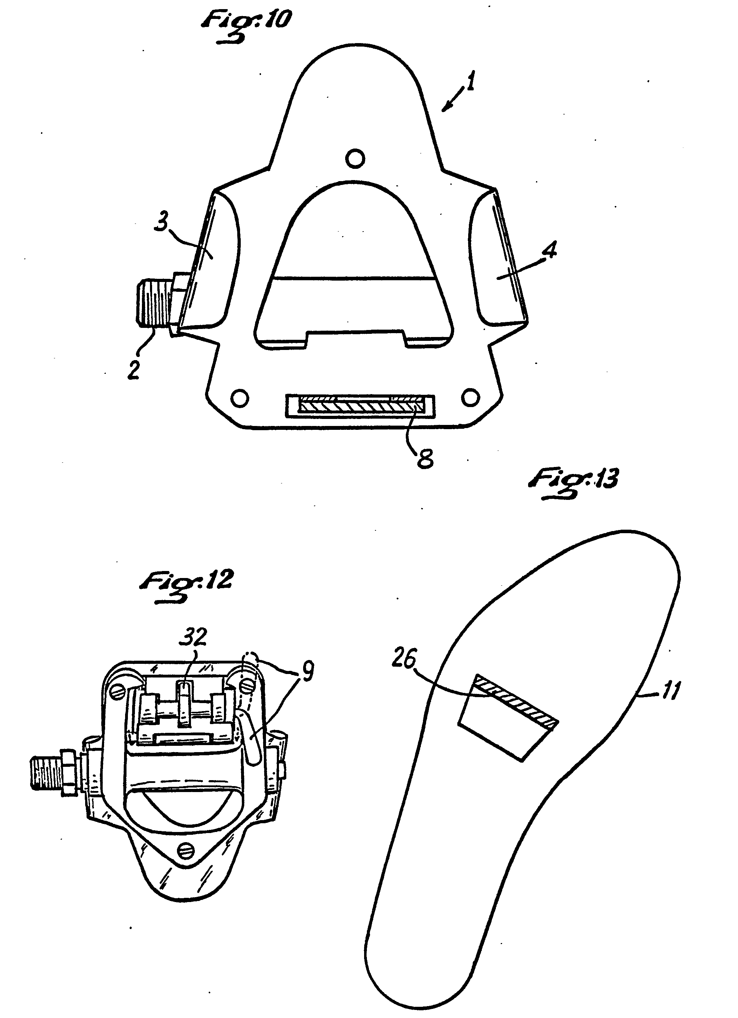

. Figure 7: une autre variante de réalisation de plate-forme, selon l'invention;

. Figures 8 et 9: des vues de chaussures (ou semelles) destinées à l'engagement sur la plate-forme de pédale de la figure 7;

. Figure 10: un autre type de plate-forme selon l'invention;

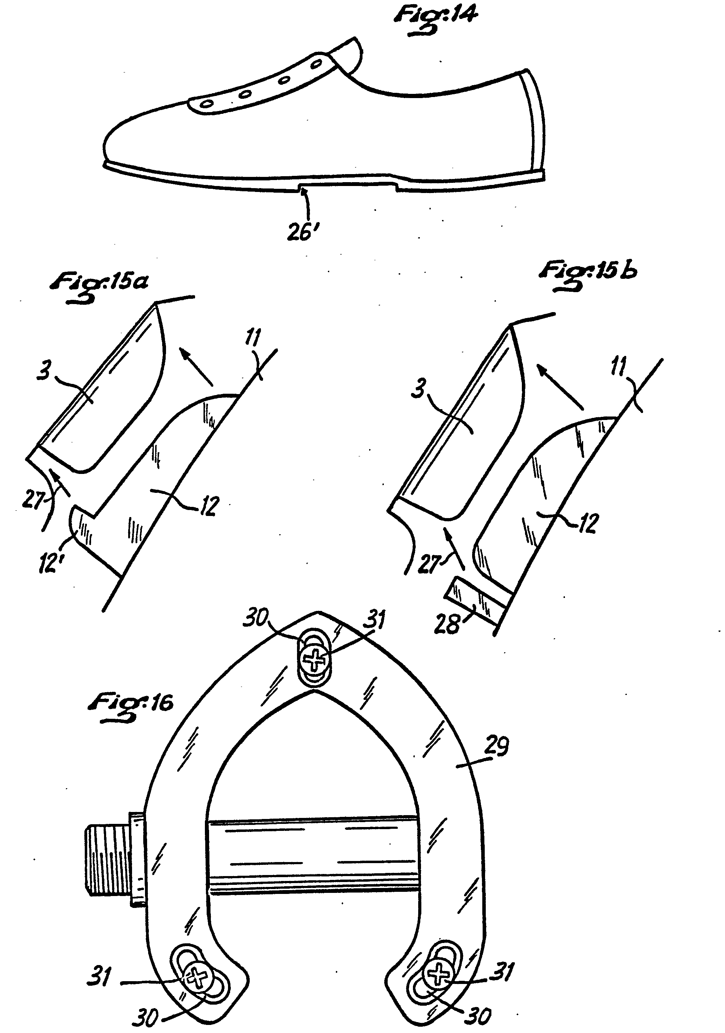

. Figures 11 et 12: des vues de dessous de plate-formes illustrant des modes de fonctionnement du pêne de verrouillage de la chaussure;

. Figures 13 à 15: plusieurs variantes de réalisation de la semelle de chaussure et desdits moyens d'encastrement, adaptés à la plate-forme de la figure 10;

. Figure 10: une vue de dessus du support de la plate-forme de la figure 10.

On se référera tout d'abord aux illustrations schématiques des figures 1 à 3. Telle que représentée sur la figure 1, la nouvelle pédale de l'invention est constituée par une plaque métallique 1 assujettie à un support (non visible ici) fixé au-dessus de l'axe 2 de la pédale ou qui peut être accouplé directement à la manivelle du pédalier de cycle. Cette plaque, qui peut être plate ou cambrée, est repliée sur ses faces latérales en deux rabats 3, 4 jouant le rôle de glissières et comporte sur sa partie avant une plaquette repliée 5 formant butée et protection pour la chaussure, avec possibilité de réglage longitudinal sur le support, selon la longueur de la chaussure. La plate-forme peut être échancrée en 6 et elle est munie sur sa partie postérieure d'une découpe 7 servant au passage d'un pêne 8 manoeuvrable par tige 9 et dont le rôle sera précisé plus loin. En outre, la plaque 1 peut-être orientée angulairement sur son support au moyen de vis 10.

La chaussure adaptée à cette pédale comporte une semelle 11 de même conformation que la plate-forme (plate ou cambrée) et munie d'une part de deux ailerons latéraux 12 et 13, aptes à être encastrés dans les glissières 3 et 4, et d'une encoche 14 au moins aussi longue que le pêne 8 de la plate-forme et de profondeur au moins égale à la partie de la gâche ou du pêne 8 qui dépasse de la plaque 1 en position enclenchée. Cette encoche de préférence armée, est située à une distance plus ou moins grande du bord antérieur de la semelle (par exemple 10,5 cm pour pointure de 39, distance de 11,5 cm pour pointure de 41... etc). Par contre, quelle que soit la pointure, la position des ailerons 12, 13 par rapport à l'encoche 14 reste immuable ainsi d'ailleurs que la distance entre les extrémités postérieures des ailerons et l'encoche, laquelle est égale à la distance entre les extrémités postérieures des glissières latérales 3, 4 et le pêne 8 de la plate-forme 1. Bien entendu, la longueur et la forme des glissières 3, 4 et des ailerons 12, 13 sont adaptées pour une mise en place et un retrait faciles de la chaussure. En pratique, les glissières latérales ainsi que les ailerons correspondants revêtent une forme rentrante, en sorte de V retourné, de façon à faciliter et améliorer l'engagement de la chaussure sur la plate-forme. Par ailleurs, la largeur de la semelle 11, d'une extrémité à l'autre des ailerons 12, 13, reste toujours la même quelle que soit la pointure; elle est au maximum égale à la largeur de la plate-forme 1 au niveau des glissières latérales 3, 4.

Selon les variantes illustrées sur les figures 4 à 6, la butée avant de la plate-forme 1 est remplacée par un troisième rabat formant glissière 15, également réglable longitudinalement. La semelle de chaussure 11 se prolonge alors à l'avant par un nouvel aileron 16 correspondant. Dans le mode de réalisation de la figure 8, cet aileron est remplacé par une gorge 17 pratiquée dans l'épaisseur avant de la semelle et destinée à venir s'encastrer dans la glissière 15. Cela permet de réduire la longueur totale du dispositif.

On se référera maintenant aux figures 7 à 9 qui montrent un autre mode d'exécution particulièrement intéressant de l'invention. Dans cette réalisation, la semelle de chaussure 11 ne comporte plus les ailerons précités mais une gorge ou cannelure 18, qui au lieu d'être uniquement à l'avant comme sur la variante de la figure 6, entoure tout l'avant de la chaussure. Cette gorge, qui peut être armée pour éviter tout phénomène de cisaillement, vient s'engager sur les deux glissières latérales 3 et 4 de la plate-forme 1 en faisant office de guide lors de l'introduction de la chaussure sur la plate-forme 1, tout en facilitant le retrait de cette chaussure, après usage. Les glissières ont ici la même forme, légèrement arrondie, que les bords de la semelle. La plate-forme peut comporter ou non, à sa partie avant une butée de type 5 (fig. 1) ou une glissière de type 15 (fig. 4).

Quelle que soit la pointure de la chaussure, les deux extrémités 19 et 20 de la gorge 18 restent toujours à la même distance de l'encoche 14, cette distance étant la même que celle existant entre les extrémités postérieures 21 et 22 des glissières 3 et 4 et le pêne 8; l'encoche 14 restant toujours, comme dans le cas ci-dessus, à une distance variable du bord extérieur de la semelle selon la pointure de la chaussure. Par ailleurs, comme dit ci-dessus et quelle que soit la pointure, la largeur de la semelle 11 reste standard au niveau des points 19 et 20 et, au-delà de ces points sur une longueur égale à celle des glissières 3, 4. La poussée vers l'avant de la chaussure s'effectue par la mise en butée des extrémités des gorges 19 et 20 avec les bords 21 et 22 des glissières latérales. Lors de cette mise en butée, le pêne 8 se trouve automatiquement au-dessous de l'encoche 14.

On se référera maintenant aux figures 10 et 13 à 10 illustrant des variantes de réalisation.

Conformément à une première variante de l'invention, l'encoche transversale dénommée ci-dessus 14 et prévue sous la semelle de la chaussure 11 est remplacée par une pièce présentant une arête 20 en saillie (voir fig. 13) sur le bord de laquelle vient de bloquer le pêne 8 du système de verrouillage de la chaussure sur la plate-forme 1. Selon une réalisation illustrée sur la figure 14, l'arête 26' -au lieu d'être encastrée dans la semelle- est constituée par un décrochement de la semelle sur tout ou partie de la largeur de cette dernière. Cette substitution à l'encoche d'un élément en saillie permet d'éviter tout obtruction, par de la terre ou des gravillons, de la zone de contact-arrêt du pêne pour le verrouillage.

Selon l'autre variante du dispositif précité où la semelle 11 est munie d'ailerons ou débordements latéraux 12, la partie inférieure de ces ailerons est avantageusement munie d'un épaulement 12' qui permet la mise en butée de l'aileron sur l'extrémité inférieure de la glissière 3, ceci selon la flèche 27 (voir fig. 15a). En variante, illustrée par la figure 15b, on peut prévoir à titre de butée un ergot 28 indépendant de l'aileron 12 et faisant corps avec la semelle 11 de la chaussure.

Toujours dans le cas où la semelle est munie d'ailerons latéraux, il peut être avantageux de prévoir également une mise en butée de l'avant des ailerons sur la partie interne avant des glissières latérales de la plate-forme. Pour atteindre ce but, il suffit d'incurver vers l'intérieur ladite partie avant ou même de fermer complètement cette partie des glissières.

Conformément à une autre caractéristique intéressante de l'invention, la plate-forme 1 est réglable en toutes directions et en particulier angulairement sur son support 29 relié à la manivelle du pédalier. A cet effet, comme on peut le voir sur la figure 10, le support 29 est muni d'orifices 30 de type boutonnière en forme de "haricot" qui permettent aux vis de fixation 31 de la plate-forme d'être mises en place suivant la position désirée pour cette dernière.

Sur les figures 11 et 13, on a représenté de façon simplifiée des vues de dessous de la plate-forme afin d'illustrer des modes de verrouillage et libération du pêne 8. Sur la figure 11, la tige 9 actionne un ressort 23 monté entre deux axes 24, 25 dont le dernier est solidaire du support de la plate-forme. Sur la figure 12, la tige ou manelle 9 (en verrouillage vers le bas et déverrouillage vers le haut, position en pointillé) comporte sur son axe un maneton 32 dont la forme à pans coupés ou arrondis permet de faire sortir par poussée, ou de rétracter par relâchement, le pêne 8 de verrouillage.

On notera que ce système de verrouillage peut se situer aussi bien complètement à l'arrière de la plate-forme qu'au milieu de cette partie arrière (comme dit ci-dessus). De même, l'arête ou encoche de la semelle de chaussure peut se situer au même niveau que la partie postérieure du débordement de la semelle (ou l'extrémité des gorges) si le pêne et l'extrémité postérieure des glissières se trouvent également sur une même ligne. Dans tous les cas, la distance de la perpendiculaire passant par l'encoche ou arête de la semelle et la ligne imaginaire réunissant les deux points de celle-ci où s'effectue la mise en butée avec les glissières, est fixe, quelle que soit la pointure et elle se trouve égale à la distance de la perpendiculaire passant par le pêne et une ligne imaginaire réunissant les deux glissières de la plate-forme, au niveau de leur mise en butée avec la semelle.

En fonctionnement l'utilisateur, après avoir réglé angulairement s'il y a lieu la position de la plate-forme 1 sur son support 29, engage sa chaussure sur la plate-forme en encastrant les ailerons ou les gorges de la semelle dans les glissières de la pédale; en bout de course, le verrouillage s'opère par engagement du pêne 8 dans l'encoche ou l'arête 26; sinon, il suffit d'actionner la manette 9 prévue à vet effet.

Grâce au dispositif selon l'invention, les quatre phases du pédalage: poussée vers l'avant, appui vers le bas, répulsion vers l'arrière et remontée, sont accomplies efficacement, l'appui de la chaussure s'exerçant parfaitement par le contact complet de la semelle avec l'ensemble de la plate-forme. On notera que la phase de répulsion vers l'arrière est accomplie avec une efficacité maximum par enclenchement du pêne 8 dans l'encoche 14 ou l'arête 16 de la semelle. En cas de chute et si l'utilisateur n'a pas la possibilité de déverrouiller manuellement, ce déverrouillage s'effectuera automatiquement par contact de la manette 9 avec le sol, la tige de cette manette étant prévue de façon inclinée vers l'arrière et pouvant être terminée par exemple par une petite boule pour faciliter ledit contact.

De nombreux essais ont confirmé la supériorité, en tous points, des systèmes selon l'invention sur les autres dispositifs de pédalage déjà connus. En effet, la mise en place du pied sur la plate-forme est rapide et l'efficacité du pédalage est surprenante grâce: au contact parfait de la semelle avec la plate-forme, à l'abaissement des points d'appui qui s'exercent en totalité plus près de l'axe de la pédale (ou du dispositif d'enclenchement sur la manivelle), et à la décontraction du pied qui ne subit plus l'emprise du cale-pied et de la courroie associée. Par ailleurs, le confort est parfait et la sécurité du système est sûre. Enfin, la marche avec la chaussure cycliste de l'invention est rendue possible du fait de l'absence de cale-pédale.

A titre de variante encore, on notera que les glissières peuvent être rapportées sur la plate-forme, au lieu de constituer des rabats de cette dernière. Dans ce cas, elles peuvent être réglables angulairement par pivotement, le pêne ayant alors une forme elliptique pour permettre à la semelle de suivre l'orientation donnée par les glissières.

Il est important de noter que grâce à la forme des glissières de l'invention (en V retourné), ces dernières font office de guidage pour la mise en place de la chaussure sur la plate-forme. En outre, les moyens d'encastrement latéraux de la semelle (ailerons ou gorges) peuvent ainsi se coincer aisément dans les glissières; ce coincage collabore à la poussée vers l'avant lors du pédalage et il permet en outre, lorsque le cycliste est en position déverrouillée, de continuer à pédaler sans risque de retrait involontaire de la chaussure.

## Revendications

1. Ensemble de pédalage pour cycles comportant une plate-forme à glissières et système de verrouillage, ladite plate-forme étant assujettie à un support de fixation relié à la manivelle du pédalier, et étant montée orientable sur ce support de fixation, ainsi qu'une chaussure adaptée, ensemble dans lequel

les deux glissières (3, 4) de la plate-forme (1) ont une orientation rentrante vers l'avant en forme de V retourné;

la semelle (11) de la chassure est munie de moyens d'encastrement dans lesdites glissières;

ledit système de verouillage comprend dans la partie arrière de la plate-forme (1) un pêne (8) pouvant être amené à faire verrou et à s'effacer, sous l'action d'un dispositif de commande (9);

la semelle (11) de la chaussure est pourvue, sur le dessous, d'un moyen d'arête transversale (14, 26, 26') de longueur au moins égale à celle du pêne (8) et destinée à coopérer avec ce dernier pour assurer le verrouillage de la chaussure sur la plate-formé caractérisé en ce que:

lesdites glissières sont des glissières latérales, lesdits moyens d'encastrement sont prévus sur les faces latérales de la semelle de la chassure, les moyens d'arête transversales comprennent une encoche (14) ou un décrochement (26, 26') encastré complètement dans la semelle et que ledit pêne (8) fait saillie vers le haut par rapport à cette plate-forme.

2. Ensemble selon la revendication 1, caractérisé en ce que lesdits moyens d'encastrement de la semelle sont constitués par des ailerons latéraux (12, 13) qui viennent se coincer dans les glissières (3, 4).

3. Ensemble selon la revendication 2, caractérisé en ce que la plate-forme (1) est munie d'une troisième glissière (15) formant butée avant réglable en longueur.

4. Ensemble selon l'une quelconque des revendications 1 à 3, caractérisé en ce qué les glissières latérales (3, 4) de la plate-forme (1) sont incurvées vers l'intérieur ou fermées dans leur partie antérieure de manière à former des butées pour la partie avant des ailerons, ces derniers pouvant en outre comporter sur leur partie arrière un épaulement (12') formant également butée sur l'arrière desdites glissières.

5. Ensemble selon la revendication 4, caractérisé en ce que l'épaulement (12') des ailerons (12, 13) est remplacé par un ergot (28) solidaire de la semelle (11) et faisant saillie par rapport à cette dernière.

6. Ensemble selon la revendication 1, caractérisé en ce que lesdits moyens d'encastrement de la semelle sont constitués par deux gorges latérales (18) qui viennent s'engager dans les glissières (3, 4).

7. Ensemble selon la revendication 6, caractérisé en ce que la semelle comporte en outre une gorge avant (17) pouvant s'enclencher dans une troisième glissière avant (15) de la plate-forme.

8. Ensemble selon l'une quelconque des revendications 1 à 7, caractérisé en ce que la plate-forme (1) est réglable longitudinalement et angulairement sur son support (29) grâce à des vis (31) avant et arrière aptes à être serrées dans des orifices à boutonnière (30).

9. Ensemble selon l'une quelconque des revendications 1 à 8, caractérisé en ce que le verrouillage et le déverrouillage du pêne (8) par rapport à l'encoche (14) ou à l'arête (26, 26') de la semelle de chaussure, sont obtenus par un dispositif à ressort (23) manoeuvrable par manette (9), installé sous la partie arrière de la plate-forme (1).

10. Ensemble selon la revendication 9, caractérisé en ce que la manette (9) actionne un maneton (32) qui vient en appui sur le pêne (8) ou s'écarte de ce dernier pour le verrouillage ou le déverrouillage.

## Patentansprüche

1. Pedaleinrichtung für Fahräder mit einer eine Kulisseneinrichtung aufweisenden Plattform und mit einer Verriegelung, wobei die Plattform an einer mit der Pedalachse verbundenen Befestigungsstütze angebracht und ausrichtbar an dieser Befestigungsstütze montiert ist und wobei ein angepaßtes Schuhwerk vorgesehen ist, bei der die zwei Kulissen (3 und 4) der Plattform (1) eine nach vorn konvergierende, die Gestalt eines umgekehrten V aufweisende Ausrichtung haben, die Sohle (11) des Schuhwerks mit den Kulissen zusammenwirkende Einrastmittel aufweist, die Verriegelung im hinteren Teil der Platform (1) einen als Riegel wirkenden, unter der Wirkung einer Steuervorrichtung (9) verriegelnden und rückziehbaren Bolzen (8) umfaßt, die Sohle (11) des Schuhwerks unten einen sich in der Querrichtung erstreckenden Anschlag (14 und 26) umfaßt, dessen Länge mindestens der Länge des Bolzens (8) entspricht und der mit letzterem zusammenarbeitet, um das Schuhwerk an der Plattform zu verriegeln, dadurch gekennzeichnet, daß die Kulissen (3 und 4) als seitliche Kulissen ausgebildet sind, daß die Einrastmittel an den Seitenflächen der Schuhwerksohle vorgesehen sind, daß die quergerichteten Anschlagmittel eine Kerbe (14) oder eine Stufe (26 und 26') umfassen, die in der Sohle voll aufgenommen ist und daß der Bolzen (8) sich relativ zur Plattform (1) nach oben bewegt.

2. Einrichtung nach Anspruch 1 dadurch gekennzeichnet, daß die Einrastmittel der Sohle als seitliche Flügel (12 und 13) ausgebildet sind, die sich in die Kulissen (3 und 4) festkeilen.

3. Einrichtung nach Anspruch 2 dadurch gekennzeichnet, daß die Plattform (1) mit einer dritten Kulisse (15) ausgestattet ist, die eine vorderen Anschlag von einstellbarer Länge bildet.

4. Einrichtung nach einem der Ansprüche 1 bis 3 dadurch gekennzeichnet, daß die seitlichen Kulissen (3 und 4) der Plattform (1) nach innen gekrümmt oder in ihrem Vorderteil abgeschlossen sind, so daß sie Anschläge für den Vorderteil der Flügel bilden, wobei letztere auch in ihrem Hinterteil eine Schulter (12') umfassen können, die ebenfalls einen Anschlag am Hinterteil der Kulissen bildet.

5. Einrichtung nach Anspruch 4 dadurch gekennzeichnet, daß die Schulter (12') der Flügel (12 und 13) durch eine Nase (28) ersetzt ist, die einen festen Teil der Sohle (11) bildet und von dieser vorsteht.

6. Einrichtung nach Anspruch 1 dadurch gekennzeichnet, daß die Einrastmittel der Sohle als seitliche Nuten (18) ausgebildet sind, in die die Kulissen (3 und 4) eingreifen können.

7. Einrichtung nach Anspruch 6 dadurch gekennzeichnet, daß die Sohle auch eine vordere Kehle (17) umfaßt, die über eine dritte vordere Kulisse (15) der Plattform gestülpt werden kann.

8. Einrichtung nach einem der vorhergehenden Ansprüche 1 bis 7 dadurch gekennzeichnet, daß die Plattform (1) in der Längsrichtung und winkelmäßig auf ihrer Stütze (29) mittels vorderen und hinteren Schrauben (31) einstellbar ist, die in Langlöchern (30) festgezogen werden können.

9. Einrichtung nach einem der Ansprüche 1 bis 8 dadurch gekennzeichnet, daß die Verriegelung und die Entriegelung des Bolzens (8) relativ zur Kerbe (14) oder zum Anschlag (26 und 26') der Sohle des Schuhwerkers mittels einer mit einem Handgriff (9) zu handhabenden Federeinrichtung (23) bewerkstellig wird, die unter dem Hinterteil der Plattform (1) angebracht ist.

10. Einrichtung nach Anspruch 9 dadurch gekennzeichnet, daß der Handgriff (9) einen Exzenter (32) betätigt, der gegen den Bolzen (8) zu liegen kommt oder sich davon entfernt, um die Verriegelung und die Entriegelung zu bewirken.

## Claims

1. Pedalling unit for cycles of the type comprising: a sliding platform and a locking system, the said platform being fastened to an attachment bearer connected to the crank of the crank-gear and being pivotably supported on this bearer, and a suitable shoe, unity in which: the two slides or guides (3, 4) of the platform (1) have a re-entrant orientation toward the front in form of returned V; the sole (11) of the shoe has means for the embedding in the guides; the said locking system comprises in the rear of the platform (1) a latch (8) able to act as a bolt and to withdraw by mean of a control device (9); the sole (11) of the shoe is provided underneath with a transverse chamfer (14, 26) with a length at least equal to the one of the latch (8) and able to co-operate with this last to lock the shoe on the platform; the unit being characterized by the fact that: the guides (3, 4) are lateral guides, the said embedding means are provided on the lateral faces of the shoe's sole, the means of transverse chamfer comprise a recess (14) or a cutout (26, 26') entirely embedded in the sole and that the said latch (8) raises above the platform upper surface.

2. Unit according the claim 1, wherein the said embedding means of the sole are constituted by fins (12, 13) extending laterally from said sole and which get jammed in the guides (3, 4).

3. Unit according the claim 1, wherein the platform (1) is provided with a third guide (15) acting as front abutment, adjustable lengthwise.

4. Unit according any one of the claims 1 to 3, wherein the lateral guides (3, 4) of the platform (1) are incurved on the inside or closed on front part in order to make abutments for the front part of the fins, these last being able moreover to have on their rear part a shouldering (12') acting as abutment on the rear of the said guides.

5. Unit according the claim 4, wherein the shouldering (12') of the fins (12, 13) is replaced by a pin (28) integral with the sole (11) and projecting from this last.

6. Unit according the claim 1, wherein the said embedding means are constituted by two lateral grooves (18) intented to engage in the guides (3, 4).

7. Unit according the claim 6, wherein the sole comprises moreover a front groove (17) able to engage with a third front guide (15) of the platform.

8. Unit according anyone of the claims 1 to 7, wherein the platform (1) is longitudinally and angularly adjustable on its bearer (29) owing to front and rear screws (31) able to be gripped in buttonholes (30).

9. Unit according one of the claims 1 to 8, wherein the locking and the unlocking of the latch (8) with regard to the recess (14) or the cutout (26, 26') of the shoe's sole, are obtained thanks to a spring device (23) operated with hand-lever (9) disposed under the rear part of the platform (1).

10. Unit according the claim 9, wherein the hand-lever (9) drive a crank pin (32) coming against the latch (8) or moving this latch for the locking or unlocking operations.

0 094 276

Fig:1

Fig:2

Fig:3

Fig:4

Fig:5

0 094 276

Fig.6

Fig.7

Fig.8

Fig.9

Fig.11

*Fig.10*

*Fig.13*

*Fig.12*

0.094 276

Fig.14

26'

Fig.15a

3

11

27'

12'

12

Fig.15b

3

11

27

12

28

30    31

Fig.16

29

31

31

30

30

7